# FASCICULE DE BREVET EUROPEEN

(11) **EP 0 673 206 B1**
(45) Date de publication et mention de la délivrance du brevet: **04.02.1998**
(21) Numéro de dépôt: 94902655.3
(22) Date de dépôt: 18.11.1993
(51) Int. Cl.: A23G 3/28, A21D 13/00

(54) **PROCEDE D'IMPRESSION D'UN SIGLE SUR UNE PREPARATION ALIMENTAIRE**
VERFAHREN ZUM SIGEL-DRUCKEN AUF NAHRUNGSMITTELN
METHOD FOR PRINTING SYMBOLS ON FOOD

(30) Priorité: 19.11.1992 FR 9214138
(43) Date de publication de la demande: 27.09.1995
(73) Titulaire: DOPPLER, Robert, F-68390 Sausheim (FR)
(72) Inventeur: DOPPLER, Robert, F-68390 Sausheim (FR)
(86) Numéro de dépôt international: EP9303229
(87) Numéro de publication internationale: WO9410853

(56) Documents cités:
- EP-A- 0 168 027
- CH-A- 269 789
- CH-A- 298 862
- FR-A- 433 019
- FR-A- 576 192
- FR-A- 1 158 279
- FR-A- 2 610 567
- FR-A- 2 639 795
- GB-A- 1 221 292
- GB-A- 2 205 024

## Description

La présente invention concerne un procédé d'impression d'un sigle sur une préparation alimentaire, notamment un article de boulangerie, confiserie, pâtisserie, viennoiserie, ou similaire.

Le marquage de produits alimentaires tels que des petits pains, des croissants, s'est toujours fait au moyen d' étiquettes apposées sur les produits et qu'il faut retirer avant de pouvoir les consommer. Cette technique de marquage n'est pas hygiénique et certaines législations nationales interdisent l' apposition d' étiquettes sur les produits alimentaires non emballés.

Il existe d'autres procédés de marquage sans l' apposition d' étiquettes, qui ont fait l'objet des publications décrites ci-après. Mais ces procédés ne peuvent pas être appliqués au marquage des produits de boulangerie et de viennoiserie pour des raisons de réglementation, et ne donnent pas satisfaction quant à la tenue et à la définition du motif sur les produits marqués.

Le brevet français **FR-A-576 192** décrit un procédé d'impression sur produits de boulangerie pâtisserie et chocolaterie. Le motif à imprimer est apposé sur des cachets plaques ou pellicules alimentaires par des encres ou produits colorsé, puis est apposé en surface sur les produits à marquer avant pendant ou après fermentation ou cuisson. Le procédé d'impression utilisé est basé sur le principe du tampon. Le cachet portant le motif ne reste pas en contact avec le produit à marquer pendant la fermentation ou la cuisson. Il n'y a donc pas de **transfert** à chaud du motif du support sur le produit à marquer. Cette méthode d'impression par tampon ne permet pas de garantir un marquage précis fiable et visible pour les raisons suivantes : si le motif est apposé sur le produit avant cuisson, lors de la cuisson, le motif a tendance a pénétrer et diffuser dans ledit produit ; si le motif est apposé sur le produit après cuisson, le motif est instable et s'étale sur la surface du produit. De plus dans le procédé décrit par cette publication, il n'est pas précisé la nature des encres ou produits colorants utilisés. La réglementation sur les produits de boulangerie ou de viennoiserie est très sévère, et n'autorisait jusqu'à présent aucun marquage sur les pains ou petits pains, car les substances colorantes utilisables et les procédés d'impression connus risqueraient d'altérer les caractéristiques hygiéniques et gustatives de l'aliment.

Le brevet suisse **CH-A-269 789** décrit un procédé d'impression à froid destiné notamment à la chocolaterie mais pouvant aussi convenir aux produits de boucherie/charcuterie. Il s'agit en fait d'une feuille portant un dessin en relief et sur laquelle on dispose un moule pour verser une préparation à base de chocolat ou de gelée. La préparation fige au refroidissement et lors du démoulage le dessin apparaît en creux. Ce procédé ne peut pas être utilisé pour marquer des produits de boulangerie, le dessin en creux disparaîtrait lors de la cuisson, et ne resterait pas suffisamment visible.

La demande de brevet français **FR-A-2 639 795** décrit un procédé de marquage de produits de boulangerie par tampon . Le tampon portant le motif à reproduire est trempé dans un colorant alimentaire puis appliqué sur le pain avant cuisson. Le motif appliqué de cette manière sur le pain avant cuisson a tendance à disparaître pendant la cuisson, le colorant diffusant ou pénétrant dans la pâte. De plus ce procédé ne peut pas satisfaire aux exigences de la réglementation appliquée aux produits de boulangerie.

Le brevet suisse **CH-A-298 862** décrit un procédé pour décorer des articles de confiserie. Le motif à transférer est reproduit sur une feuille souple qui est ensuite enduite de colorant alimentaire, puis recouverte par une plaque pourvue d' évidements destinés à recevoir la masse pâteuse chaude. En refroidissant la masse pâteuse durcit et le motif reste imprimé en relief. Il n'y a pas de cycle de cuisson qui permette de transférer le motif sur le produit à marquer et de modifier les propriétés du colorant alimentaire afin d'obtenir une meilleure définition et une bonne tenue du motif sur ledit produit.

Le brevet français **FR-A-1 158 279** décrit un procédé pour décorer des pièces comestibles par une technique d'impression au crible utilisant une pâte d'impression à base de beurre de cacao, ladite pâte durcissant par refroidissement. Il n'y a donc pas de cycle de cuisson permettant le transfert à chaud. De plus, cette technique nécessite que la surface à imprimer soit parfaitement plane, ce qui n'est pas le cas des produits de boulangerie dont la forme varie au hasard au cours de la cuisson.

La demande de brevet européen **EP-A-462 093** décrit un procédé d'impression d'un sigle sur des confiseries, telles que du chocolat, par une technique de tampographie. L'encre utilisée comprend notamment des pigments tels que le carbonate de calcium et du dioxyde de titane. Cette encre est à base aqueuse et a un séchage physique à température ambiante. Ce procédé ne présente donc pas de cycle de cuisson permettant un transfert à chaud et la "cuisson" de la pâte d'impression.

La présente invention se propose de pallier les inconvénients mentionnés ci-dessus en proposant un procédé pour marquer et identifier des préparations alimentaires au moyen de l'impression d'un sigle indélébile réalisé avec une substance ou un mélange de substances comestibles compatibles de par leur nature avec les composants desdites préparations alimentaires. Ces substances ont fait l'objet d'une autorisation d' utilisation par la réglementation en vigueur pour les produits de boulangerie et de viennoiserie car elles ont l'avantage de ne modifier en rien les caractéristiques hygiéniques et gustatives de l' aliment.

Ce but est atteint par le procédé de l'invention caractérisé en ce que l'on dépose sur un support souple une reproduction dudit sigle réalisée au moyen d'une composition pâteuse, appelée masse, comportant au moins de la poudre de lait, du beurre de cacao du jaune d'oeuf, du carbonate de calcium et du dioxyde de titane, en ce que l'on transfère cette reproduction dudit sigle avec son support sur ladite préparation alimentaire, en ce que l'on fait subir à cette préparation un cycle de cuisson, et en ce que l'on retire ledit support souple à la fin dudit cycle.

Selon un mode de réalisation préféré, lorsqu'on applique le procédé à des articles de boulangerie pâtisserie ou viennoiserie notamment des petits pains ou des croissants, pour transférer la reproduction on applique le support sur la pâte mise en forme et non levée.

Selon un autre mode de réalisation, lorsqu'on applique le procédé à des articles de boulangerie, pâtisserie ou viennoiserie notamment des petits pains ou des croissants, pour transférer la reproduction on applique le support sur la pâte levée.

Pour transférer ladite reproduction du sigle sur la pâte on dépose cette pâte sur ledit support portant la reproduction du sigle, de telle manière que cette reproduction soit disposée entre le support et la pâte.

Selon une autre forme de réalisation, pour transférer ladite reproduction du sigle sur la pâte, on humidifie la zone d'application du support et on colle ce support sur la pâte de telle manière que la reproduction du sigle soit disposée entre la pâte et le support.

D'une manière préférentielle pour déposer la reproduction d'un sigle sur un support souple on utilise une technique de sérigraphie et le support souple est avantageusement constitué par du papier de cuisson ou tout autre matériau résistant à la chaleur.

La présente invention sera mieux comprise en référence à la description d'exemples de réalisation et de leurs variantes dans le cadre de l'application principale relative à la boulangerie-pâtisserie.

Pour mettre en oeuvre ce procédé et notamment pour l'appliquer à des produits de boulangeries tels que des pains, des petits pains, des croissants réalisés avec de la pâte on commence par créer des étiquettes de transfert, qui peuvent être avantageusement prédécoupées. Ces étiquettes de transfert sont constituées par un support tel que par exemple des feuilles de papier de cuisson de parchemin ou de tout autre support résistant à la chaleur, sur lequel on a déposé une reproduction du sigle de l'inscription ou de la marque que l'on souhaite reproduire. Ce dépôt est fait de préférence par un procédé du type sérigraphique, au moyen d'une composition pâteuse, couramment appelée masse, appliquée à travers un masque, ou par un procédé d'impression approprié.

Cette étiquette de transfert peut être réalisée en relativement grande série et stockée. La masse utilisée contient de la poudre de lait du beurre de cacao, du jaune d'oeuf, du carbonate de calcium précipité et du dioxyde de titane. Cette masse peut être teintée par un ou plusieurs colorants alimentaires tels qu'un colorant jaune identifié par le n° E 104 ou un colorant orange identifié par le n° E 110.

Le mélange des composants n'est pas critique. Il convient d'obtenir une masse onctueuse collante qui s'assimile, du point de vue de la consistance, à une pâte d'impression classique.

L' association du carbonate de calcium avec le dioxyde de titane, dans des proportions définies, présente de nombreux avantages. La masse a de meilleures propriétés d'adhérence sur le papier de cuisson pour la reproduction du motif notamment par sérigraphie. Le motif reste bien défini et ne s'étale pas. Pendant le cycle de cuisson, lorsque sont atteintes des températures d'environ 180°C l'oxygène contenu dans le carbonate de calcium et le dioxyde de titane sort de la masse vers l'extérieur et forme une croûte sèche à la surface de l'article à marquer. De ce fait, ladite masse reste homogène, ne pénètre pas et ne diffuse pas dans la pâte. Elle reste en surface sous la forme d'une croûte sèche colorée reproduisant fidèlement le motif prévu. Le motif est alors inamovible et reste bien visible. Ces substances forment une masse de couleur blanche, qui est en général la couleur demandée par les pâtissiers et boulangers. Cette coloration peut toutefois être modifiée aisément par l'adjonction de colorants alimentaires traditionnels.

Pour marquer les petits pains il suffit de "coller" l' étiquette de transfert prédécoupée sur la boule de pâte mise en forme avant sa levée ou sa cuisson. A cet effet, on peut soit placer l' étiquette sous la boule de pâte, de telle manière que la reproduction du sigle soit disposée entre le support (papier de cuisson par exemple) et la pâte, soit humecter légèrement la pâte avec un peu d'eau, de lait ou de dorure à base d'oeuf et plaquer l'étiquette sur la zone humectée.

On fait ensuite subir à la pâte un cycle de cuisson traditionnelle. Le support peut être retiré à la sortie du four. Le sigle est ainsi transposé sur le petit pain de façon inamovible.

Ce procédé permet donc d'obtenir une impression indélébile d'une marque distinctive sur un produit de boulangerie.

La présente invention n'est pas limitée aux modes de réalisation décrits mais peut être modifiée ou adaptée en fonction des besoins ou des exigences particulières. Le procédé s'applique à toutes les interventions de transformation et de préparation de substances alimentaires. Les traiteurs, restaurateurs, boulangers confiseurs, pâtissiers, charcutiers et autres artisans du secteur alimentaire peuvent être intéressés par l'apposition d'un signe de marquage pour individualiser leurs productions. Le procédé ci-dessus s'applique dans tous les cas moyennant des modifications mineures qui entrent dans le cadre de cette invention comme définie par les revendications.

## Revendications

1. Procédé d'impression d'un sigle sur une préparation alimentaire, notamment d'un article de boulangerie, confiserie, pâtisserie, viennoiserie, ou similaire, dans lequel l'on dépose sur un support souple une reproduction dudit sigle réalisée au moyen d'une composition pâteuse, appelée masse comportant au moins de la poudre de lait, du beurre de cacao, du jaune d'oeuf, du carbonate de calcium et du dioxyde de titane, en ce que l'on transfère cette reproduction dudit sigle avec son support sur ladite préparation alimentaire, en ce que l'on fait subir à cette préparation un cycle de cuisson et en ce que l'on retire ledit support souple à la fin dudit cycle.

2. Procédé selon la revendication 1, appliqué à des articles de boulangerie, pâtisserie ou viennoiserie, notamment des petits pains, des croissants ou des biscuits, caractérisé en ce que pour transférer cette reproduction, on applique le support sur la pâte mise en forme et non levée.

3. Procédé selon la revendication 1, appliqué à des articles de boulangerie, pâtisserie ou viennoiserie, notamment des petits pains, des croissants ou des biscuits, caractérisé en ce que pour transférer cette reproduction, on applique le support sur la pâte mise en forme et levée.

4. Procédé selon la revendication 2 ou 3, caractérisé en ce que pour transférer ladite reproduction du sigle sur la pâte on dépose cette pâte sur ledit support portant la reproduction du sigle de telle manière que cette reproduction soit disposée entre le support et la pâte.

5. Procédé selon la revendication 2 ou 3, caractérisé en ce que pour transférer ladite reproduction du sigle sur la pâte, on humidifie la zone d'application du support et on colle ce support sur la pâte de telle manière que la reproduction du sigle soit disposée entre la pâte et le support.

6. Procédé selon la revendication 1, caractérisé en ce que pour déposer une reproduction d'un sigle sur un support souple, on utilise une technique de sérigraphie.

7. Procédé selon la revendication 1, caractérisé en ce que le support souple est constitué par du papier de cuisson.

## Claims

1. A method for printing a device on a food product, in particular bakery, candy, pastry, viennoiserie, or similar products, in which a reproduction of said device is laid down on a flexible support, this reproduction consisting in a pasty composition, called mass, including at least milk powder, cocoa fats, yolk, carbonate of calcium and titanium dioxide, in that this reproduction is transferred from said device with its support on said food product, in that a cooking cycle is applied to said product, and in that said flexible support is withdrawn at the end of said cycle.

2. Method according to claim 1, applied to bakery, pastry or viennoiserie products, in particular rolls, croissants or cookies, characterised in that in order to transfer this reproduction, the support is applied on the formed and not risen paste

3. Method according to claim 1, applied to bakery, pastry or viennoiserie products, in particular rolls, croissants or cookies, characterised in that in order to transfer this reproduction, the support is applied on the formed and risen paste

4. Method according to claims 2 or 3, characterised in that in order to transfer said reproduction of the device on the paste, this paste is laid down on said support holding the reproduction of the device, in such a way that this reproduction is disposed between the support and the paste.

5. Method according to claims 2 or 3, characterised in that in order to transfer said reproduction of the device on the paste, the area where the support is applied, is moistened and this support is stuck on the paste, in such a way that the reproduction of the device is disposed between the paste and the support.

6. Method according to claim 1, characterised in that in order to lay down a reproduction of a device on a flexible support, a technique of serigraphy is used.

7. Method according to claim 1, characterised in that the flexible support is made of cooking paper.

## Patentansprüche

1. Vorgang des Aufdrucks eines Sigels auf ein zubereitetes Nahrungsmittel, insbesondere auf Brot- und Süßwaren, Kuchen und Hefegebäck oder ähnliches. Der Vorgang zeichnet sich dadurch aus, daß auf ein weiches Trägenmaterial die Nachbildung des genannten Sigels aufgelegt wild, die aus einer Teigmischung, *Masse* genannt, hergestellt wild, welche aus mindestens Milchpulver, Kakaobutter, Eigelb, Kalziumkarbonat und Titaxidioxid besteht, daß die Nachbildung des Sigels zusammen mit ihrem Träger auf das besagte Nahrungsmittel aufgelegt, die Zubreitung gebacken, und nach dem Backvorgang der Träger entfernt wird.

2. Vorgang wie unter 1 beschrieben, für Brotwaren, Konditorei- oder Hefegebäck, insbesondere Brötchen, Croissants oder Kekse, der dadurch gekennzeichnet ist, daß zur Übertragung der Abbildung der Träger auf den in Form gebrachten, noch nicht gegangenen Teig aufgelegt wild.

3. Vorgang wie unter 1 beschrieben, für Brotwaren, Konditorei- oder Hefegebäck, vor allem Brötchen, Croissants oder Kekse, der dadurch gekennzeichnet ist, daß zur Übertragung der Abbildung der Träger auf den in Form gebrachten und gegangenen Teig aufgelegt wird.

4. Vorgang wie unter 2 oder 3 beschrieben, der dadurch gekennzeichnet ist, daß zur Übertragung der genannten Sigel-Nachbildung auf den Teig, der Teig auf den Träger mit dem Sigelbild gegeben wild, sodaß sich die Nachbildung zwischen Träger und Teig befindet.

5. Vorgang wie unter 2 oder 3 beschrieben, der dadurch gekennzeichnet ist, daß zur Übertragung der genannten Sigel-Nachbildung auf den Teig die Auftragsstelle des Trägers befeuchtet und der Träger auf den Teig geklebt wird, so daß sich die Abbildung des Sigels zwischen Teig und Träger befindet.

6. Vorgang wie unter 1 beschrieben, der dadurch gekennzeichnet ist, daß zur Anbringung der Nachbildung des Sigels auf einen weichen Träger auf eine Siebdrucktechnik zurückgegriffen wird.

7. Vorgang wie unter 1 beschrieben, der dadurch gekennzeichnet ist, daß der weiche Träger aus Backpapier besteht.
